# EUROPÄISCHE PATENTSCHRIFT

(11) **EP 2 139 641 B1**
(45) Veröffentlichungstag und Bekanntmachung des Hinweises auf die Patenterteilung: **02.03.2011**
(21) Anmeldenummer: 08735204.3
(22) Anmeldetag: 12.04.2008
(51) Int. Cl.: B23Q 3/155, B23Q 3/157

(54) **WERKZEUGWECHSELVORRICHTUNG**
TOOL CHANGING DEVICE
DISPOSITIF DE CHANGEMENT D'OUTIL

(30) Priorität: 16.04.2007 DE 102007018710
(43) Veröffentlichungstag der Anmeldung: 06.01.2010
(73) Patentinhaber: Index-Werke GmbH & Co. KG Hahn & Tessky, 73730 Esslingen (DE)
(72) Erfinder: GROSSMANN, Walter, 73666 Baltmannsweiler (DE)
(74) Vertreter: Hoeger, Stellrecht & Partner Patentanwälte
(86) Internationale Anmeldenummer: PCT/EP2008/002919
(87) Internationale Veröffentlichungsnummer: WO 2008/125310

(56) Entgegenhaltungen:
- EP-A- 0 102 170
- EP-A- 0 900 627
- EP-A- 1 175 958
- EP-A- 1 762 332
- WO-A-88/00510
- WO-A-93/05926
- DE-A1- 10 020 801
- DE-U1- 8 435 353
- DE-U1- 20 306 087
- US-A- 3 587 873
- US-A- 5 908 374
- US-A1- 2002 006 853

## Beschreibung

Die Erfindung betrifft eine Werkzeugwechselvorrichtung für mindestens einen Werkzeugträger aufweisende Werkzeugmaschinen, umfassend ein Werkzeugmagazin mit einem eine Vielzahl von Speicheraufnahmen aufweisenden Speicherelement, das zum Überführen der Speicheraufnahmen in mindestens eine Werkzeugaustauschposition bewegbar ist, und mit einem ersten Bediengerät, mit welchem ein Übergeben eines Werkzeugs zwischen der Werkzeugaustauschposition und einer Werkzeugwechselposition, definiert durch eine Werkzeugaufnahme des mindestens einen in einer Werkzeugwechselstellung stehenden Werkzeugträgers, durchführbar ist.

Derartige Werkzeugwechselvorrichtungen sind aus dem Stand der Technik, wie z.B der DE-U-8435353 bekannt. Bei diesen besteht das Problem, dass diese in das Konzept der Werkzeugmaschine integriert sein müssen und somit Bestandteil der Werkzeugmaschine selbst sind, so dass eine einfache Montage und beispielsweise auch eine nachträgliche Montage nicht möglich ist.

Der Erfindung liegt daher die Aufgabe zugrunde, eine Werkzeugwechselvorrichtung der gattungsgemäßen Art derart zu verbessern, dass diese effizient an der Werkzeugmaschine montierbar ist.

Diese Aufgabe wird durch eine Werkzeugwechselvorrichtung gemäß Anspruch 1 gelöst.

Der Vorteil dieser Lösung ist darin zu sehen, dass damit eine in sich zusammenwirkende Einheit als Ganzes an dem Maschinengestell montiert werden kann und somit besonders einfach montierbar ist und insbesondere auch zu einer nachträglichen Montage geeignet ist.

Besonders günstig ist es bei dieser Lösung, wenn das Werkzeugmagazin außerhalb eines Arbeitsraums der Werkzeugmaschine angeordnet ist, da damit die Konzeption des Arbeitsraums der Werkzeugmaschine durch das Werkzeugmagazin weder gestört noch in irgendeiner Weise sonst beeinträchtigt wird.

Das Bediengerät weist eine Führung auf, längs welcher ein Werkzeuggreifer des Bediengeräts bewegbar ist.

Mit einem derartigen Bediengerät, lässt sich in besonders einfacher Weise der Werkzeuggreifer in den Arbeitsraum hineinbewegen.

Die erfindungsgemäße Aufgabe lässt sich konstruktiv besonders günstig dadurch lösen, dass die Werkzeugwechselvorrichtung eine an dem Maschinengestell der Werkzeugmaschine montierbare Vorrichtungsbasis aufweist, an welcher sowohl das Werkzeugmagazin als auch das Bediengerät gehalten sind. Hinsichtlich der Anordnung der Führung des Bediengeräts wurden in diesem Zusammenhang keine näheren Angaben gemacht. Eine günstige Lösung sieht vor, dass die Führung des Bediengeräts an der Vorrichtungsbasis vorgesehen ist, so dass bei Montage der Vorrichtungsbasis auch gleichzeitig eine Ausrichtung der Führung des Bediengeräts relativ zur Werkzeugmaschine erfolgt.

Hinsichtlich der Ausrichtung der Führung relativ zu der Werkzeugmaschine wurden bislang keine näheren Angaben gemacht. So sieht eine besonders günstige Lösung vor, dass die Führung sich parallel zu einer durch zwei vorgegebene Bewegungsachsen definierten Bearbeitungsebene des Werkzeugträgers erstreckt.

Durch diese Ausrichtung der Führung ist in besonders einfacher Weise ein Einwechseln der Werkzeuge in den Werkzeugträger realisierbar.

Insbesondere lässt sich das Einwechseln des Werkzeugs dann einfach realisieren, wenn die Bearbeitungsebene sich ungefähr parallel zu einer Mittelachse der Werkzeugaufnahme erstreckt.

Hinsichtlich der Ausrichtung der Führung zu einer an der Werkzeugmaschine vorgesehenen Werkstückspindel wurden ebenfalls keine näheren Angaben gemacht.

So ist es besonders günstig, wenn die Führung sich ungefähr parallel zu einer Spindelachse einer Werkstückspindel der Werkzeugmaschine erstreckt. In diesem Fall lässt sich besonders günstig das Werkzeug dem Werkzeugträger zuführen, insbesondere lassen sich dabei Kollisionen mit der Werkstückspindel und dem Werkstück vermeiden.

Ferner ist es besonders günstig, wenn die Führung sich ungefähr parallel zu einer Mittelachse der Werkstückaufnahme des in Werkzeugwechselstellung stehenden Werkzeugträgers erstreckt, so dass die Führung auch dazu eingesetzt werden kann, das Werkzeug in Einsteckrichtung zu bewegen.

Insbesondere ist es dabei günstig, wenn die Führung sich ungefähr parallel zu einer Z-Achse der Werkzeugmaschine erstreckt.

Da die Integration einer Werkzeugwechselvorrichtung in eine Werkzeugmaschine stets auch ein Raumproblem darstellt, lässt sich die Eingangs genannte Aufgabe besonders günstig dann lösen, wenn das Werkzeugmagazin neben einem Maschinenbettkörper des Maschinengestells angeordnet ist, so dass alle mit dem Maschinenbettkörper verbundenen Einrichtungen und Elemente der Werkzeugmaschine das Vorsehen und Anordnen des Werkzeugmagazins nicht beeinträchtigen.

Ferner kann das Werkzeugmagazin grundsätzlich auf unterschiedlichen Seiten des Maschinenbettkörpers angeordnet sein.

Beispielsweise wäre es denkbar, das Werkzeugmagazin an einer Oberseite des Maschinenbettkörpers anzuordnen.

Eine für die Zugänglichkeit und Anordnung des Werkzeugmagazins günstige Lösung sieht vor, dass das Werkzeugmagazin nahe einer quer zu einer Z-Achse verlaufenden Seite des Maschinenbettkörpers angeordnet ist.

Das Werkzeugmagazin selbst kann in unterschiedlichster Art und Weise ausgebildet sein.

Beispielsweise sind alle denkbaren Ausführungen von Speicherelementen denkbar.

Eine konstruktiv besonders günstige Lösung sieht vor, dass das Speicherelement sich in einer Speicherebene erstreckt, die quer, vorzugsweise senkrecht, zu einer Frontseite des Maschinenbettkörpers verläuft.

Insbesondere ist die räumliche Anordnung des Speicherelements dann günstig lösbar, wenn die Speicherebene im Abstand von einer Seite des Maschinenbettkörpers verläuft.

Hinsichtlich der Anordnung der Führung für den Werkzeuggreifer wurden bislang keine näheren Angaben gemacht.

Beispielsweise könnte die Führung auf einer Seite der Speicherebene angeordnet sein. Eine besonders günstige Bewegung des Werkzeuggreifers ist jedoch dann realisierbar, wenn die Führung die Speicherebene durchsetzt.

In diesem Fall sieht eine zweckmäßige Lösung vor, dass der Werkzeuggreifer längs der Führung zwischen einer magazinseitigen Position und einer werkzeugträgerseitigen Position verfahrbar ist.

Damit ist es ausreichend, den Werkzeuggreifer längs der Führung zu verfahren, um einerseits das Werkzeug aufzunehmen und andererseits in die Werkzeugaufnahme des Werkzeugträgers einzuwechseln.

Eine zweckmäßige Lösung sieht hierbei vor, dass der Werkzeuggreifer in der magazinseitigen Position auf einer Seite der Speicherebene liegt und in der werkzeugseitigen Position auf der anderen Seite der Speicherebene, so dass in einfacher Weise das Werkzeug im Bereich des Werkzeugmagazins aufgenommen und andererseits in einfacher Weise in die Werkzeugaufnahme eingewechselt werden kann.

Eine besonders günstige räumliche Anordnung sieht vor, dass der Werkzeuggreifer in der magazinseitigen Position auf einer dem Maschinengestell abgewandten Seite der Speicherebene steht.

Hinsichtlich der Ausbildung des Werkzeuggreifers selbst wurden im Zusammenhang mit der bisherigen Erläuterung der einzelnen Ausführungsbeispiele keine näheren Angaben gemacht. So ist vorgesehen, dass das erste Bediengerät einen Werkzeuggreifer umfasst, der mit einem Mehrfachgreifer versehen ist, mit welchem mehrere Werkzeuge durch mehrere Werkzeughalteelemente greifbar sind.

Ein derart ausgebildeter Werkzeuggreifer hat den Vorteil, dass damit mit kurzen Werkzeugwechselseiten Werkzeuge in die Werkzeugaufnahme des Werkzeugträgers eingesetzt werden können, da die Möglichkeit besteht, mit dem Werkzeuggreifer einerseits mit dem einen Werkzeughalteelement das neu einzusetzende Werkzeug mitzubewegen und gleichzeitig mit einem anderen Werkzeughalteelement das Werkzeug, das ausgewechselt werden soll, aus der Werkzeugaufnahme des Werkzeugträgers zu entnehmen.

Um dieses Einwechseln und Auswechseln des Werkzeugs in einfacher Weise realisieren zu können, sieht eine zweckmäßige Lösung vor, dass der Mehrfachgreifer bewegbar an einer Greiferbasis gehalten ist.

Eine derartige Bewegung könnte prinzipiell eine beliebige Bewegungsform sein. Einfach ansteuerbar und einfach antreibbar ist jedoch eine Lösung, bei welcher der Mehrfachgreifer gegenüber einer Greiferbasis des Werkzeuggreifers um die Schwenkachse schwenkbar gelagert ist.

Insbesondere ist es günstig, wenn bei einem derartigen Mehrfachgreifer vorgesehen ist, dass eines der Werkzeughalteelementes des Werkzeuggreifers zur Aufnahme eines Werkzeugs aus dem Werkzeugträger vorgesehen ist, und eines der Werkzeughalteelemente zum Einsetzen eines Werkzeugs in den Werkzeugträger vorgesehen ist.

Prinzipiell könnte ein Antrieb für den Werkzeuggreifer beliebig vorgesehen sein.

Eine konstruktiv günstige Lösung sieht vor, dass in der Greiferbasis ein Greiferantrieb vorgesehen ist, mit welchem der Mehrfachgreifer zwischen einer Werkzeugaufnahmestellung und einer Werkzeugabgabestellung bewegbar ist, wobei in diesem Fall in der Werkzeugaufnahmestellung eine Aufnahme des Werkzeugs aus der Werkzeugaufnahme des Werkzeugträgers erfolgt und in der Werkzeugabgabestellung ein Einsetzen und somit Abgeben des Werkzeugs an die Werkzeugaufnahme des Werkzeugträgers erfolgt.

Vorzugsweise ist bei einer derartigen Lösung vorgesehen, dass in der werkzeugträgerseitigen Position des ersten Bediengeräts der Mehrfachgreifer mit einem Werkzeughalteelement der Werkzeugaufnahme des mindestens einen in der Werkzeugwechselstellung stehenden Werkzeugträgers zugeordnet ist, um das Werkzeug aus diesem zu entnehmen oder in diesen einzusetzen, je nach dem, welcher Vorgang hierdurch erfolgen soll.

Prinzipiell wäre es denkbar, mit dem Werkzeuggreifer, insbesondere dem Mehrfachgreifer direkt auf das Werkzeugmagazin zuzugreifen, und aus dem Speicherelement die Werkzeuge zu entnehmen oder in diesem abzulegen.

Da jedoch das Speicherelement des Werkzeugmagazins in der Regel langsam drehbar ist und diese langsame Bewegbarkeit sich nicht verlangsamend auf das Werkzeugwechseln auswirken soll, ist vorzugsweise vorgesehen, dass das Bediengerät eine der magazinseitigen Position des Mehrfachgreifers zugeordnete Übergabeeinheit aufweist, mit welcher ein Werkzeug zwischen der Werkzeugaustauschposition und der Werkzeugübergabeposition für den Mehrfachgreifer bewegbar ist.

Eine derartige Übergabeeinheit schafft die Möglichkeit, während der Zeiten, während derer die Greiferbasis und der Werkzeuggreifer in den Arbeitsraum bewegt werden und aus dem Arbeitsraum bewegt werden sowie das Werkzeug auswechseln, das nächstfolgende Werkzeug aus dem Speicherelement des Werkzeugmagazins zu entnehmen und in der Werkzeugübergabeposition für den Mehrfachgreifer bereit zu halten.

Insbesondere ist dabei vorgesehen, dass mit der Übergabeeinheit ein Werkzeug aus dem Speicherelement entnehmbar und dem Mehrfachgreifer zum Aufnehmen präsentierbar oder ein Werkzeug vom Mehrfachgreifer übernehmbar und in das Speicherelement einsetzbar ist, wobei diese Aktionen der Übergabeeinheit völlig entkoppelt sind von den Aktionen des Mehrfachgreifers und der Greiferbasis, die erforderlich sind, um das Werkzeug von der Werkzeugübergabeposition in die Werkzeugwechselposition zu verbringen und umgekehrt. Damit kann der Vorgang des Wechselns des Werkzeugs in der Werkzeugspindel ohne einen durch das Speicherelement bedingten Zeitanteil erfolgen. Gerade diese Entkopplung trägt dazu bei, den Werkzeugaustausch mit dem Speicherelement effizient zu gestalten ohne einen übermäßigen Aufwand auf Seiten des Speicherelements treiben zu müssen, um dieses schnell bewegen zu können.

Besonders günstig lässt sich eine Bewegung des Werkzeugs dann realisieren, wenn das Werkzeug zwischen der Werkzeugaustauschposition und der Werkzeugübergabeposition in einer Ebene bewegbar ist, so dass die geometrischen Randbedingungen für die Bewegung des Werkzeugs sehr einfach sind und somit diesen in einfacher Weise durch eine zeitlich schnell arbeitende Konstruktion Folge geleistet werden kann.

Hinsichtlich der Ausrichtung der Werkzeuge in dem Speicherelement wurden dabei bislang keine näheren Angaben gemacht. So sieht eine vorteilhafte Lösung vor, dass Werkzeugschäfte der Werkzeuge in dem Speicherelement ungefähr parallel zueinander ausgerichtet sind.

Ferner ist vorteilhafterweise das Speicherelement so ausgebildet, dass die für die Werkzeuge vorgesehenen Speicheraufnahmen des Speicherelements in einer Ebene bewegbar sind, so dass auch das Speicherelement sehr einfach aufgebaut und realisiert werden kann.

Des Weiteren ist es vorteilhaft, wenn maschinenseitige Werkzeugschnittstellen der Werkzeuge in dem Speicherelement parallel zueinander ausgerichtet sind.

Eine derartige parallele Ausrichtung der maschinenseitigen Werkzeugschnittstelle lässt einen geeigneten einfachen Aufbau des Speicherelements zu. Ferner ist vorteilhafterweise vorgesehen, dass die maschinenseitigen Werkzeugschnittstellen des Werkzeugs in dem Speicherelement parallel zu der maschinenseitigen Werkzeugschnittstelle des in der Werkzeugwechselposition stehenden Werkzeugs ausgerichtet sind, so dass auch der Transport oder die Bewegung des Werkzeugs durch das Bediengerät keine Änderung der Ausrichtung des Werkzeugs erfordert.

Vorzugsweise ist ebenfalls vorgesehen, dass die maschinenseitige Werkzeugschnittstelle des Werkzeugs in der Werkzeugübergabeposition parallel zu der maschinenseitigen Werkzeugschnittstelle des Werkzeugs in der Werkzeugwechselposition ausgerichtet ist, um auch diesbezüglich die Ausrichtung der Werkzeuge in dem Bediengerät nicht ändern zu müssen.

Eine günstige Ausführungsform der erfindungsgemäßen Werkzeugwechselvorrichtung sieht dabei vor, dass die maschinenseitige Werkzeugschnittstelle des Werkzeugs in dem in der Werkzeugwechselstellung stehenden Werkzeugträger parallel zu der maschinenseitigen Werkzeugschnittstelle des im Mehrfachgreifer gehaltenen Werkzeugs ausgerichtet ist.

Um das Werkzeug in einfacher Weise in die Werkzeugaufnahme des in Werkzeugwechseistellung stehenden Werkzeugträgers einsetzen zu können ist vorgesehen, dass der Mehrfachgreifer in Einsetzrichtung relativ zu der Werkzeugaufnahme des in Werkzeugwechselstellung stehenden Werkzeugträgers bewegbar ist. Dies kann entweder durch Bewegen der Greiferbasis längs der Führung oder durch eine Bewegungsachse zwischen einem Arm des Werkzeuggreifers und der Greiferbasis erfolgen.

Bei der Realisierung des Mehrfachgreifers ist es günstig, wenn Werkzeughalteelemente des Mehrfachgreifers in einer quer zur Einsetzrichtung verlaufenden Ebene bewegbar sind, um in einfacher Weise das Werkzeughalteelement an der Werkzeugaufnahme zum Einsatz bringen zu können, das benötigt wird, um bereits ein in dieser Werkzeugaufnahme sitzendes Werkzeug zu entnehmen oder ein anderes Werkzeug einzusetzen.

Hinsichtlich der bisherigen Ausführungsbeispiele der erfindungsgemäßen Werkzeugwechselvorrichtung wurde lediglich darauf abgestellt, dass das erste Bediengerät vorhanden ist.

Eine zweckmäßige Lösung sieht vor, dass die Werkzeugwechselvorrichtung ein zweites Bediengerät aufweist, mit welchem ein Übergeben eines Werkzeugs zwischen einer zweiten Werkzeugaustauschposition des Werkzeugmagazins und einer Werkzeugaufnahme eines zweiten in Werkzeugwechseistellung stehenden Werkzeugträgers, durchführbar ist.

Der Vorteil dieser Lösung ist darin zu sehen, dass diese mit einem Werkzeugmagazin auskommt, jedoch in der Lage ist, mit zwei Bediengeräten die Werkzeuge zweier Werkzeugträger rasch und effizient zu wechseln.

Bei der erfindungsgemäßen Lösung mit dem zweiten Bediengerät ist vorzugsweise vorgesehen, dass dieses hinsichtlich aller weiteren Ausbildungen in gleicher Weise konzipiert ist und dieselben Merkmale aufweist, wie die vorstehend beschriebenen einzelnen Ausführungsbeispiele der ersten Werkzeugwechselvorrichtung.

Darüber hinaus betrifft die Erfindung eine Werkzeugmaschine gemäß Anspruch 11.

Auch bei dieser Werkzeugmaschine stellt sich die eingangs genannte Aufgabe, eine derartige Werkzeugmaschine mit einer einfach montierbaren Werkzeugwechselvorrichtung auszubilden.

Diese Aufgabe wird dadurch gelöst, dass die vorstehend genannte Werkzeugmaschine eine Werkzeugwechselvorrichtung aufweist, die nach einem der Ansprüche 1 bis 10 ausgebildet ist.

Ein vorteilhaftes Ausführungsbeispiel einer derartigen Werkzeugmaschine sieht dabei vor, dass die Werkzeugmaschine zwei Werkträger aufweist, von denen jeder in eine Werkzeugwechselstellung bringbar ist und dass die Werkzeugmaschine mit einer Werkzeugwechselvorrichtung entsprechend einem oder mehreren der vorstehend beschriebenen Merkmale versehen ist.

Dabei ist zweckmäßigerweise vorgesehen, dass die beiden Werkzeugträger in ihren Werkzeugwechseistellungen mit Mittelachsen ihrer Werkzeugaufnahmen ungefähr parallel zueinander angeordnet sind, um möglichst einfach und effizient die Werkzeuge in diese Werkzeugträger einwechseln zu können.

Ferner ist es bei dieser Lösung günstig, wenn die beiden Werkzeugträger in ihren Werkzeugaustauschstellungen in Richtung quer zu den Mittelachsen der Werkzeugaufnahmen in einem Abstand voneinander angeordnet sind. Vorzugsweise sind dabei die Mittelachsen der Werkzeugaufnahmen der beiden Werkzeugträger in den Werkzeugwechselstellungen so angeordnet, dass sie ungefähr in einer Ebene liegen.

Eine derartige Ebene ist ferner vorzugsweise so ausgerichtet, dass sie ungefähr parallel zu einer Frontfläche des Maschinenbettkörpers verläuft.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine erste perspektivische Darstellung eines ersten Ausführungsbeispiels einer erfindungsgemäßen Werkzeug- maschine mit einer erfindungsgemäßen Werkzeugwechsel- vorrichtung, wobei das Werkzeug durch die Werkzeugwechsel- vorrichtung in einer Werkzeugwechselstellung steht;
- Fig. 2: eine zweite perspektivische Darstellung des ersten Ausführungsbeispiels gemäß Fig. 1;
- Fig. 3: eine dritte perspektivische Darstellung des ersten Ausführungs- beispiels der erfindungsgemäßen Werkzeugmaschine mit erfindungsgemäßer Werkzeugwechselvorrichtung bei in einer Werkzeugübergabeposition stehendem Werkzeug;
- Fig. 4: eine vierte perspektivische Darstellung des ersten Ausführungsbeispiels der erfindungsgemäßen Werkzeug- maschine mit erfindungsgemäßer Werkzeugwechselvorrichtung bei in Werkzeugübergabeposition stehendem Werkzeug;
- Fig. 5: eine perspektivische Darstellung einer Greiferbasis des ersten Ausführungsbeispiels in einer Werkzeugwechselposition;
- Fig. 6: eine weitere perspektivische Darstellung der Greiferbasis beim Schwenken des Greiferarms;
- Fig. 7: eine perspektivische Darstellung einer Übergabeeinheit in Werkzeugübergabeposition;
- Fig. 8: einen Schnitt ähnlich Linie 8-8 in Fig. 7 jedoch in Werkzeug- wechselposition;
- Fig. 9: eine perspektivische Darstellung ähnlich Fig. 1 eines zweiten Ausführungsbeispiels einer erfindungsgemäßen Werkzeug- maschine mit einer erfindungsgemäßen Werkzeugwechsel- vorrichtung;
- Fig. 10: eine perspektivische Darstellung ähnlich Fig. 2 des zweiten Ausführungsbeispiels der erfindungsgemäßen Werkzeug- maschine mit erfindungsgemäßer Werkzeugwechsel- vorrichtung;
- Fig. 11: eine perspektivische Darstellung ähnlich Fig. 3 des zweiten Ausführungsbeispiels der erfindungsgemäßen Werkzeug- maschine mit erfindungsgemäßer Werkzeugwechsel- vorrichtung;
- Fig. 12: eine perspektivische Darstellung ähnlich Fig. 4 des zweiten Ausführungsbeispiels der erfindungsgemäßen Werkzeug- maschine mit erfindungsgemäßer Werkzeugwechsel- vorrichtung;
- Fig. 13: eine perspektivische Darstellung ähnlich Fig. 3 eines dritten Ausführungsbeispiels einer erfindungsgemäßen Werkzeug- maschine mit erfindungsgemäßer Werkzeugwechsel- vorrichtung;
- Fig. 14: eine perspektivische Darstellung ähnlich Fig. 2 des dritten Aus- führungsbeispiels der erfindungsgemäßen Werkzeugmaschine mit erfindungsgemäßer Werkzeugwechselvorrichtung;
- Fig. 15: eine perspektivische Darstellung ähnlich Fig. 3 des dritten Aus- führungsbeispiels einer erfindungsgemäßen Werkzeugmaschine mit erfindungsgemäßer Werkzeugwechselvorrichtung;
- Fig. 16: eine perspektivische Darstellung ähnlich Fig. 1 eines vierten Ausführungsbeispiels einer erfindungsgemäßen Werkzeug- maschine mit erfindungsgemäßer Werkzeugwechsel- vorrichtung;
- Fig. 17: eine perspektivische Darstellung ähnlich Fig. 2 des vierten Aus- führungsbeispiels der erfindungsgemäßen Werkzeugmaschine mit erfindungsgemäßer Werkzeugwechselvorrichtung;
- Fig. 18: eine perspektivische Darstellung ähnlich Fig. 3 des vierten Aus- führungsbeispiels der erfindungsgemäßen Werkzeugmaschine mit erfindungsgemäßer Werkzeugwechselvorrichtung und in Werkstückübergabestellung stehender Gegenspindel und
- Fig. 19: eine perspektivische Darstellung ähnlich Fig. 13 des vierten Ausführungsbeispiels der erfindungsgemäßen Werkzeug- maschine mit erfindungsgemäßer Werkzeugwechselvorrichtung und in Bearbeitungsstellung verfahrener Gegenspindel.

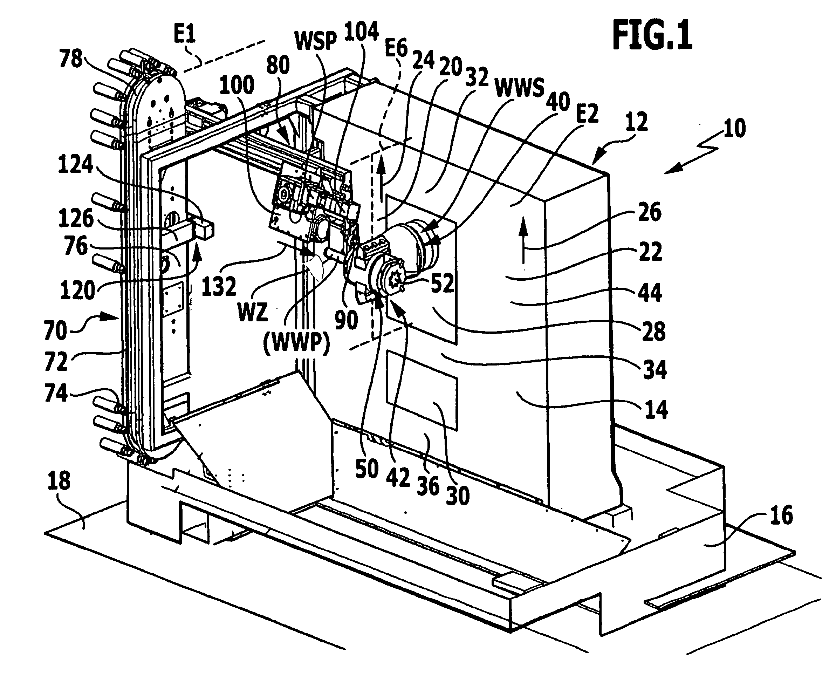

Ein in Fig. 1 dargestelltes erstes Ausführungsbeispiel einer Werkzeugmaschine 10 umfasst ein Maschinengestell 12 mit einem Maschinenbettkörper 14 sowie mit einem den Maschinenbettkörper 14 tragenden Unterbau 16, mit welchem das Maschinengestell 12 auf einer Stellfläche 18 angeordnet ist.

Beispielsweise umfasst dabei der Maschinenbettkörper 14 zwei sich über den Unterbau erhebende und ungefähr sich parallel zueinander erstreckende Säulen 20 und 22, deren Längsachsen 24, 26 ungefähr parallel und quer, vorzugsweise senkrecht zur Stellfläche 18 verlaufen.

Ferner sind zwischen den Säulen 20 und 22 Durchlässe 28, 30 vorgesehen, welche durch sich zwischen den Säulen 20, 22 erstreckende Querstreben 32, 34, 36 begrenzt sind.

Somit umschließt der Maschinenbettkörper 14 die Durchlässe 28 und 30 jochähnlich und bildet somit eine insgesamt stabile und verwindungssteife Struktur.

An dem Maschinenbettkörper 14 ist beispielsweise ein als Ganzes mit 40 bezeichneter erster Werkzeugträger gehalten, welcher in einem Arbeitsraum 42 hineinragt, der vor einer Frontseite 44 des Maschinenbettkörpers 14 liegt, wobei der Werkzeugträger 40 hierzu auf einer Führungsbasis 46 sitzt, welche vorzugsweise den Durchlass 28 durchsetzt.

Ein derartiges Maschinengestell 12 ist beispielsweise noch im Detail in den deutschen Patentanmeldungen DE 10 2006 026 183 und DE 10 2006 026 184 beschrieben.

Der erste Werkzeugträger 40 ist mit einer ersten Werkzeugspindel 50 versehen, in deren Werkzeugaufnahme 52 ein Werkzeug WZ einsetzbar ist.

Ein derartiges Werkzeug WZ ist durch die Werkzeugspindel 50 um eine Werkzeugspindelachse 54 rotierend antreibbar und dient zur Bearbeitung von entweder stationär am Maschinengestell 12 angeordneten Werkstücken oder auch beispielsweise in Werkstückspindeln, die beim ersten Ausführungsbeispiel zeichnerisch nicht dargestellt sind, gehaltenen Werkstücken.

Da die Notwendigkeit besteht, ein Werkstück mit einer Vielzahl von unterschiedlichen Werkzeugen WZ bearbeiten zu können, ist die Werkzeugmaschine 10 mit einer als Ganzes mit 60 bezeichneten Werkzeugwechselvorrichtung versehen, die an dem Maschinengestell 12, insbesondere dem Maschinenbettkörper 14 montierbar ist.

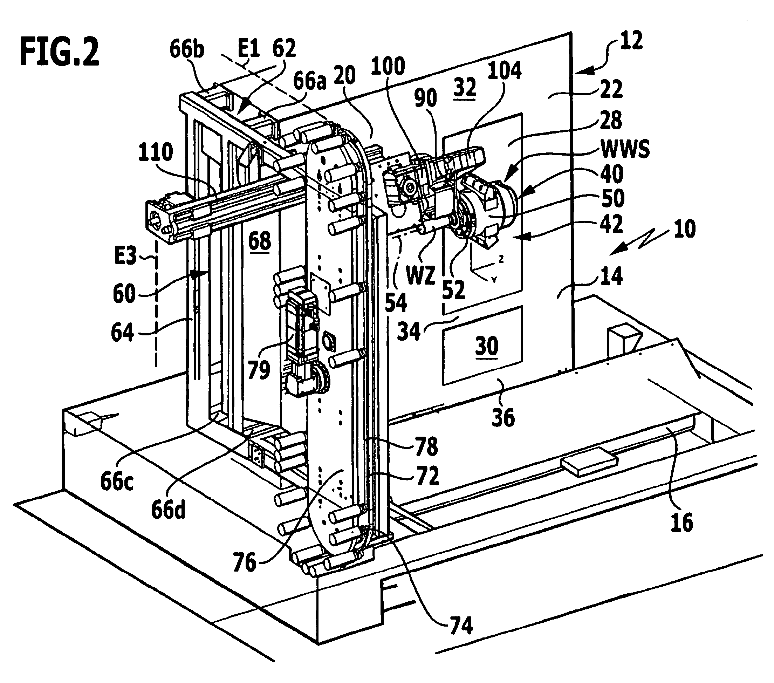

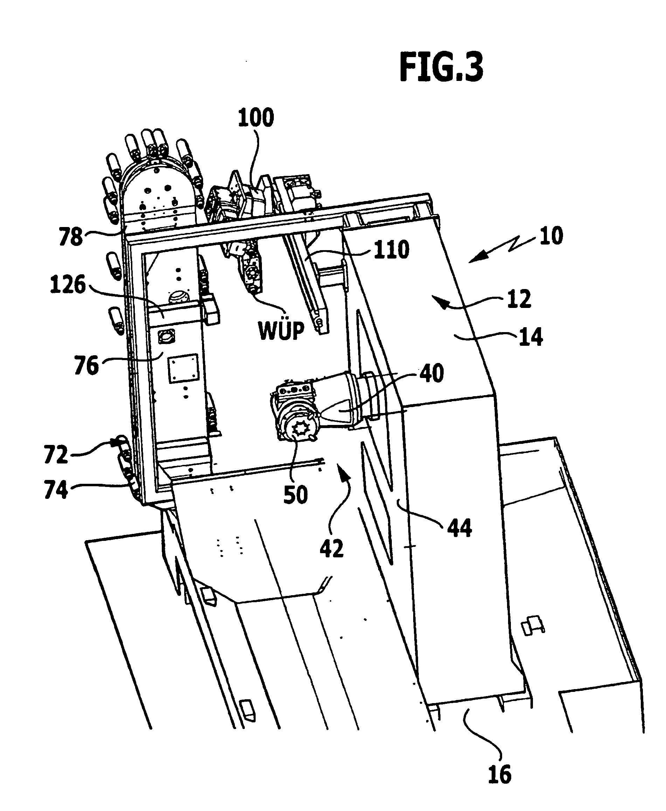

Die Werkzeugwechselvorrichtung 60 weist, wie insbesondere in Fig. 2 und 3 dargestellt, eine als Ganzes mit 62 bezeichnete Vorrichtungsbasis auf, welche einen Rahmen 64 umfasst, der durch Haltearme 66a bis 66d an einer Außenseite 68 des Maschinenbettkörpers 14 montierbar ist, wobei die Außenseite 68 vorzugsweise quer zu der Frontseite 44 und ungefähr parallel zu den Längsrichtungen 24, 26 und somit ungefähr quer zur der Stellfläche 18 verläuft.

An der Vorrichtungsbasis 62 ist dabei ein als Ganzes mit 70 bezeichnetes Werkzeugmagazin sowie mindestens ein als Ganzes mit 80 bezeichnetes erstes Bediengerät gehalten.

Das Werkzeugmagazin 70 ist seinerseits als Kettenmagazin ausgebildet und umfasst eine umlaufende Speicherkette 72, an welcher Speicheraufnahmen 74 vorgesehen sind, wobei in die Speicheraufnahmen 74 Werkzeuge WZ einsetzbar sind.

Die Speicherkette 72 ist dabei ihrerseits an einem Kettenträger 76 geführt, welcher mit einer Umlaufbahn 78 versehen ist, an welcher die Speicherkette 72 umlaufend gehalten und so geführt ist, dass sich die Speicheraufnahmen in einer Speicherebene E1 bewegen, wobei die Speicherebene E1 quer zur Frontseite 44 und im Abstand von der Außenseite 68 verläuft.

Die Speicherkette 72 ist dabei durch eine Antriebseinheit 79 umlaufend antreibbar, so dass jede der Speicheraufnahmen 74 so bewegbar ist, dass das Werkzeug WZ in eine Werkzeugaustauschposition WAP bringbar ist, aus welcher das Werkzeug WZ von dem ersten Bediengerät 80 entnehmbar und in die Werkzeugaufnahme 52 der in Werkzeugwechselstellung WWS stehenden Werkzeugspindel 50 einsetzbar ist, wobei hierzu das Werkzeug WZ in die in Fig. 1 dargestellte Werkzeugwechselposition WWP bringbar ist.

Hierzu umfasst das Bediengerät, wie insbesondere in Fig. 1 bis 4 sowie Fig. 5 und 6 dargestellt, einen Werkzeuggreifer 90, welcher als Mehrfachgreifer ausgebildet ist, und mehrere, beispielsweise zwei Werkzeughalteelemente 92a und 92b aufweist, die beispielsweise an einem Greiferarm 94 angeordnet sind, der seinerseits um eine Schwenkachse 96 schwenkbar an einer als Ganzes mit 100 bezeichneten Greiferbasis gehalten ist.

Vorzugsweise ist hierbei der Greiferarm 94 an einer Welle 98 gehalten, die ihrerseits in der Greiferbasis 100 um die Schwenkachse 96 schwenkbar und zusätzlich noch in Richtung 97 parallel zur Schwenkachse 96 verschieblich gelagert ist.

Die Greiferbasis 100 umfasst ein Gehäuse 102, in welches die Welle 98 hineingeführt ist und in welchem die Welle 98 um die Schwenkachse 96 drehbar und parallel zu dieser verschiebbar gelagert ist.

Ferner ist dem Gehäuse 102 noch ein Antrieb 104 zugeordnet, der dazu dient, die Welle 98 mitsamt dem Greiferarm 94 um die Schwenkachse 96 zu verschwenken und auch in Richtung derselben zu verschieben, um den Greifarm 94 mit den Werkzeughalteelementen 92a und 92b zum Auswechseln des Werkzeugs WZ aus der Werkzeugspindel 50 des in Werkzeugwechselstellung WWS stehenden Werkzeugträgers 40 zu bewegen.

Vorzugsweise treibt dabei der Antrieb 104 eine zeichnerisch nicht dargestellte und in dem Gehäuse 102 vorgesehene Kulissenantriebsvorrichtung an, die die Schwenkbewegung des Greiferarms 94 um die Schwenkachse 96 und die Bewegung desselben in der Richtung 97 parallel zur Schwenkachse 96 überlagert miteinander ausführt.

Die gesamte Greiferbasis 100 ist ihrerseits an einer Längsführung 110 geführt, wobei die Längsführung 110 an der Vorrichtungsbasis 62, vorzugsweise an dem Rahmen 64, angeordnet ist und eine Führungsrichtung 112 vorgibt, längs welcher die Greiferbasis 100 bewegbar ist, so dass die Greiferbasis 100 zwischen einer werkzeugträgerseitigen Position WSP und einer magazinseitigen Position MSP bewegbar ist.

Dabei steht in der werkzeugträgerseitigen Position WSP die Greiferbasis 100, wie in Fig. 1, 2 und Fig. 5 dargestellt, so, dass der Greifer 90 beispielsweise mit dem freien Werkzeughalteelement 92b das Werkzeug WZ aus der Werkzeugspindel 50 entnimmt, den Greiferarm 94 um ungefähr 180° dreht, dann das in dem Werkzeughalteelement 92a gehaltene Werkzeug WZ in der Werkzeugwechselposition WWP positioniert und dann dieses Werkzeug WZ in die Werkzeugaufnahme 52 der Werkzeugspindel 50 einwechselt.

Die Längsführung 100 durchsetzt die Speicherebenen E1 und somit liegt die Greiferbasis 100 in der werkzeugträgerseitigen Position WSP auf einer Seite der Speicherebene E1, während die Greiferbasis 100 in der magazinseitigen Position MSP auf der gegenüberliegenden Seite der Speicherebene E1 liegt.

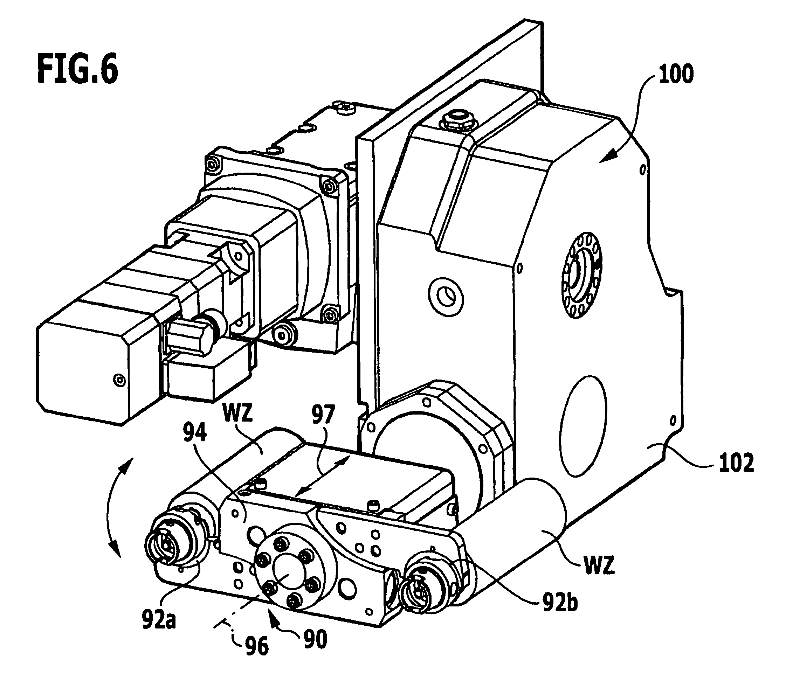

In der magazinseitigen Position MSP steht die Greiferbasis 100 so, dass der Werkzeuggreifer 90 mit einer Übergabeeinheit 120 zusammenwirken kann, wobei der Greiferarm 94 gegenüber der Werkzeugwechselposition WWP nicht gedreht wird (Fig. 6), so dass die Übergabeeinheit (120) in der Lage ist, in der Werkzeugaustauschposition WAP ein Werkzeug WZ aus der in der entsprechenden Werkzeugaustauschposition WAP stehenden Speicheraufnahme 74 zu entnehmen und in einer Werkzeugübergabeposition WÜP dem Werkzeuggreifer 90 zu übergeben.

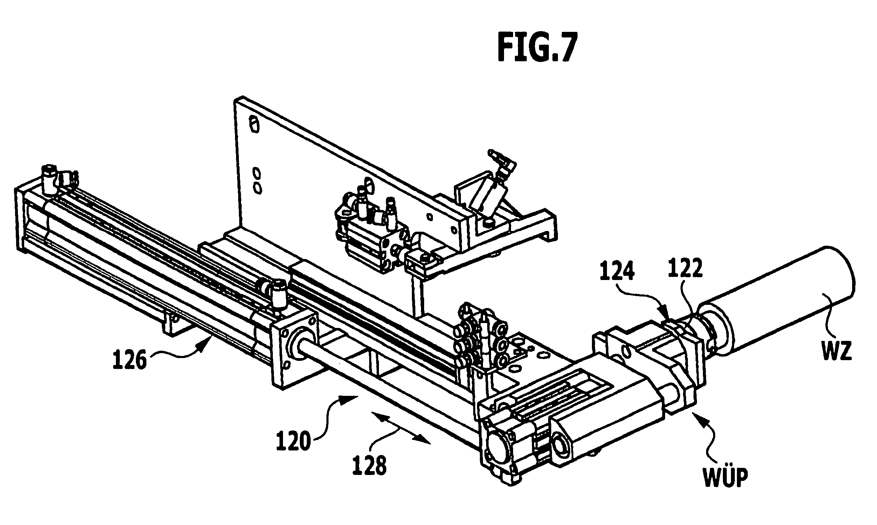

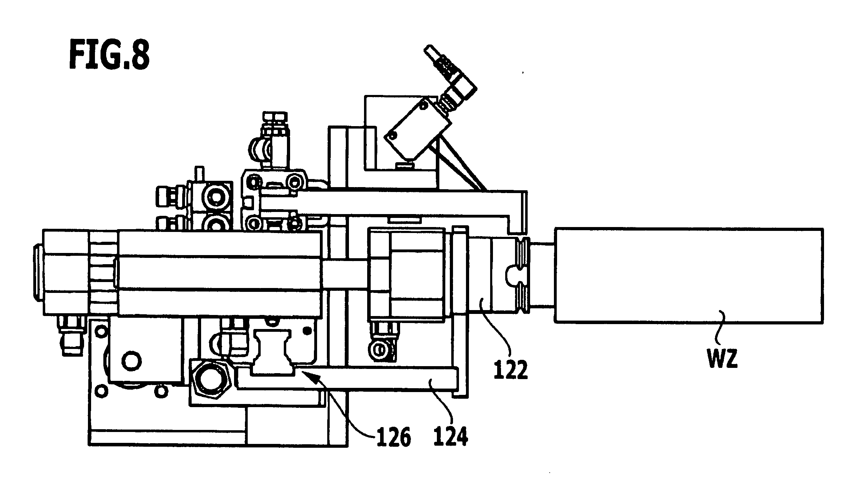

Hierzu ist die Übergabeeinheit 120, wie in Fig. 7 und 8 dargestellt, vorzugsweise so ausgebildet, dass sie einen das jeweilige Werkzeug WZ an einer maschinenseitigen Werkzeugschnittstelle 122 aufnehmenden ersten Übergabegreifer 124 aufweist, der an einer Führung 126, die beispielsweise eine Linearführung für den Übergabegreifer 124 bildet, linear verschiebbar in einer Ausfahrrichtung 128 geführt ist und somit von der Position, in welcher eine Übernahme des Werkzeugs WZ in der Werkzeugaustauschposition WAP erfolgt, soweit in Richtung der Ausfahrrichtung 128 verfahrbar ist, dass das Werkzeug WZ in der Werkzeugübergabeposition WÜP steht, in welcher dieses vom Werkzeuggreifer 90 übernommen werden kann.

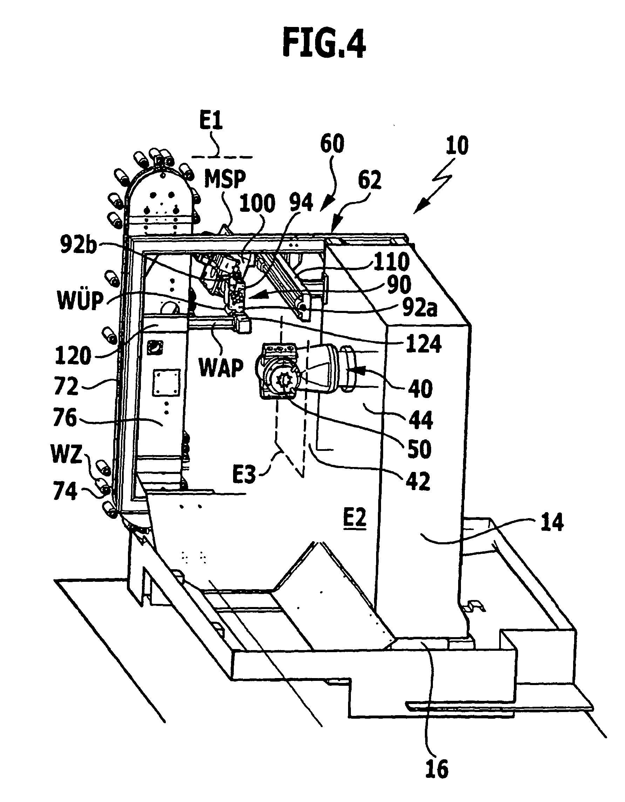

Durch die Übergabeeinheit 120 besteht somit die Möglichkeit, während der Zeit des Verfahrens der Greiferbasis 100 von der magazinseitigen Position MSP in die werkzeugträgerseitige Position WSP und während des Werkzeugwechsels in der Werkzeugspindel 50 das dem Übergabegreifer 124 übergebene Werkzeug WZ in der Werkzeugaustauschposition WAP (Fig. 3) in eine Speicheraufnahme 74 der Speicherkette 72 einzuwechseln und nach Bewegen der Speicherkette 72 aus einer anderen Speicheraufnahme 74 der Speicherkette 72 ein weiteres, nämlich beispielsweise das nächste einzuwechselnde Werkzeug WZ, zu entnehmen und dieses von der Werkzeugaustauschposition WAP (Fg. 3) in die Werkzeugübergabeposition WÜP (Fig. 4) zu bewegen.

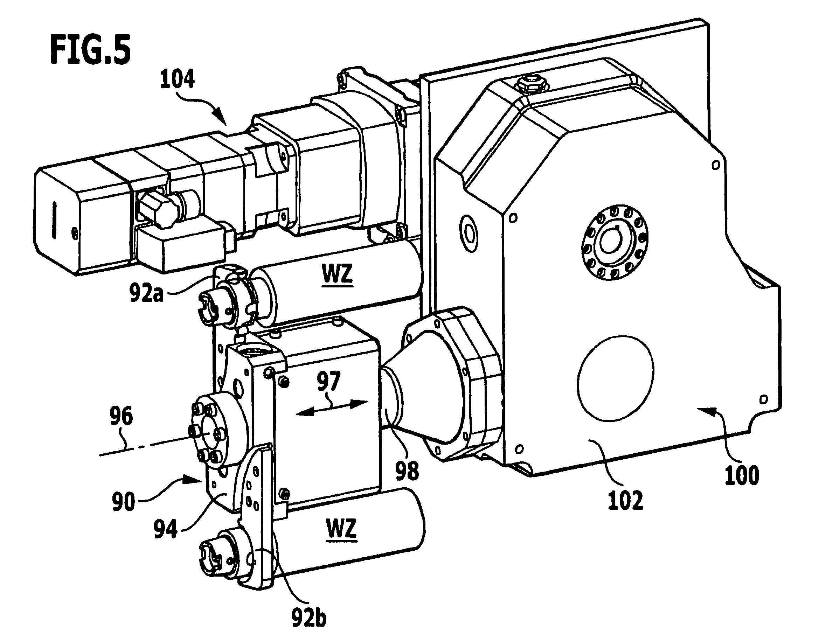

In der Werkzeugübergabeposition WÜP wird dann seitens des als Mehrfachgreifer ausgebildeten Werkzeuggreifers 90 mit dem freien Werkzeughalteelement 92a das Werkzeug aus dem Übergabegreifer 124 entnommen (Fig. 4), so dass im Werkzeughalteelement 92a ein neu einzusetzendes Werkzeug angeordnet ist, und dann das Werkzeug WZ aus dem Werkzeughalteelement 92b in den Übergabegreifer 124 eingesetzt, so dass das Werkzeughalteelement 92b frei ist. Mit dem Werkzeuggreifer 90 kann dann durch Verfahren der Greiferbasis 100 von der magazinseitigen Position MSP in die werkzeugträgerseitige Position WSP unter Schwenken des Greiferarms um 180° ein Werkzeugwechsel in der Werkzeugspindel 50 durchgeführt werden, wobei in diesem Fall zunächst mit dem freien Werkzeughalteelement 92b (Fig. 5) das in der Werkzeugaufnahme 52 der Werkzeugspindel 50 vorhandene Werkzeug WZ aus dieser entnommen wird und dann nach einem Verschwenken des Greiferarms 94 um die Schwenkachse 96 um ungefähr 180° das Werkzeug WZ, das in dem Werkzeughalteelement 92a gehalten ist, in die Werkzeugaufnahme 52 der Werkzeugspindel 50 eingesetzt wird. Dieses Wechseln erfolgt durch eine Bewegung des Werkzeuggreifers 90 in Richtung 97 der Schwenkachse 96.

Um bei der erfindungsgemäßen Werkzeugwechselvorrichtung 60 die räumlichen Verhältnisse optimal auszunutzen, ist vorzugsweise vorgesehen, dass das Werkzeugmagazin 70 außerhalb des Arbeitsraums 42 angeordnet ist und die Speicherkette 72 in der Speicherebene E1 liegt, welche durch die Speicheraufnahmen 74 definiert ist und so verläuft, dass diese den Maschinenbettkörper 14 nicht schneidet.

Vorzugsweise verläuft die Speicherebene E1 dabei quer, insbesondere senkrecht zu einer Ebene E2, die durch die Frontseite 44 des Maschinenbettkörpers 14 festgelegt ist.

Dadurch, dass alle Speicheraufnahmen 74 in der Speicherebene E1 liegen und die Werkzeuge WZ im Bereich außerhalb der maschinenseitigen Werkzeugschnittstelle 122 greifen, sind die Werkzeuge WZ mit ihren Werkzeugschäften 130 quer, vorzugsweise senkrecht, zur Speicherebene E1 und parallel zueinander ausgerichtet.

Die Werkzeuge WZ sind auch bei einer Bewegung von der Werkzeugaustauschposition WAP in die Werkzeugübergabeposition WÜP ebenfalls noch in der Speicherebene E1 bewegbar, wobei sich die Werkzeugschäfte 130 nach wie vor quer, vorzugsweise senkrecht zur Speicherebene E1 erstrecken.

Die Ausrichtung der Werkzeugschäfte 130 relativ zur Speicherebene E1 bleibt auch bei Übergabe der Werkzeuge WZ in der Werkzeugübergabeposition WÜP in den Werkzeuggreifer 90 bestehen, wobei auch in dem Werkzeuggreifer 90 die Werkzeuge WZ mit ihren Werkzeugschäften 130 beim Verfahren derselben in die Werkzeugwechselposition WWP die Ausrichtung des Schafts 130 beibehalten, so dass auch in der Werkzeugwechselposition WWP die Werkzeuge WZ mit ihren Schäften 130 so ausgerichtet sind, wie diese in Austauschposition WAP und der Werkzeugübergabeposition WÜP ausgerichtet sind und in dieser Ausrichtung in die Werkzeugaufnahme 52 der Werkzeugspindel 50 eingewechselt werden, was zur Folge hat, dass auch die Werkzeugaufnahme 52 und insbesondere die Werkzeugspindelachse 54 so auszurichten sind, dass diese quer, vorzugsweise senkrecht zur Speicherebene E1 und somit ungefähr parallel zu dem jeweiligen Werkzeugschaft 130 ausgerichtet sind.

Die maschinenseitige Werkzeugschnittstelle 122 der in den Speicheraufnahmen 74 der Speicherkette 72 gehaltenen Werkzeuge WZ erstrecken sich dabei mit ihrer Symmetrieachse 123 quer, beispielsweise senkrecht zur Speicherebene E1 und verbleiben in dieser Ausrichtung auch dann, wenn die Werkzeuge WZ im Bereich der maschinenseitigen Werkzeugschnittstelle 122 von dem Übergabegreifer 124 gegriffen und von der Werkzeugaustauschposition WAP in die Werkzeugübergabeposition WÜP gebracht und von dem Werkzeuggreifer 90 gegriffen werden.

Mit dem Werkzeuggreifer 90 sind die Werkzeuge WZ in einer parallel zu einer durch die Frontseite 44 des Maschinenbettkörpers 14 definierten Ebene E2 verlaufenden Ebene E3 bewegbar, und zwar so, dass die Symmetrieachse 123 in der Ebene E3 oder zumindest ungefähr parallel zu dieser Ebene E3 steht.

In dieser Ausrichtung sind die Werkzeuge WZ von der Werkzeugübergabe WÜP in die Werkzeugwechselposition WWP bringbar, in welcher ein Einwechseln der Werkzeuge WZ dadurch erfolgt, dass die jeweilige maschinenseitige Werkzeugschnittstelle 122 in seiner Symmetrieachse 123 koaxial zur Werkzeugspindelachse 54 ausgerichtet und in einer parallel zur Werkzeugspindelachse 54 verlaufenden Einsetzrichtung 132 in die Werkzeugaufnahme 52 eingesetzt wird.

Hierzu ist die jeweilige maschinenseitige Werkzeugschnittstelle 122 durch Verschwenken des Werkzeuggreifers 90 um die Schwenkachse 96 noch quer zur Ebene E3 bewegbar und auch durch Verschieben des Werkzeuggreifers 90 in Richtung der Schwenkachse 96 in der Einsetzrichtung 132 bewegbar, wobei die Ausrichtung der Symmetrieachse 123 der Werkzeuge WZ in dem Werkzeugmagazin 70 nach wie vor im Wesentlichen parallel ist.

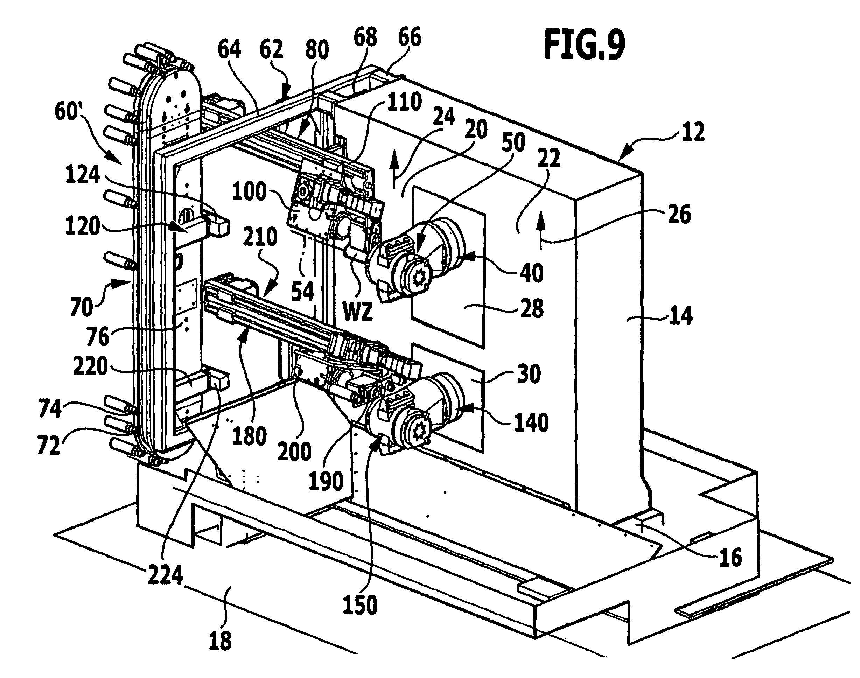

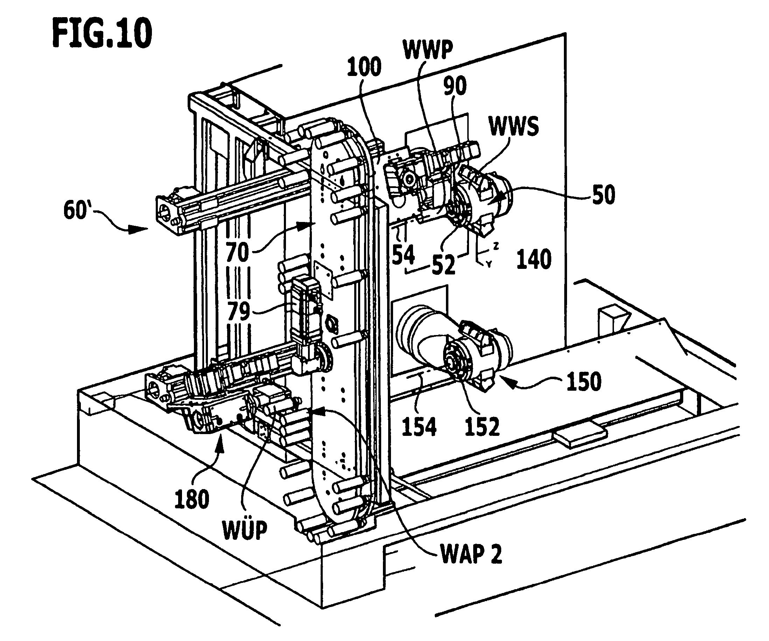

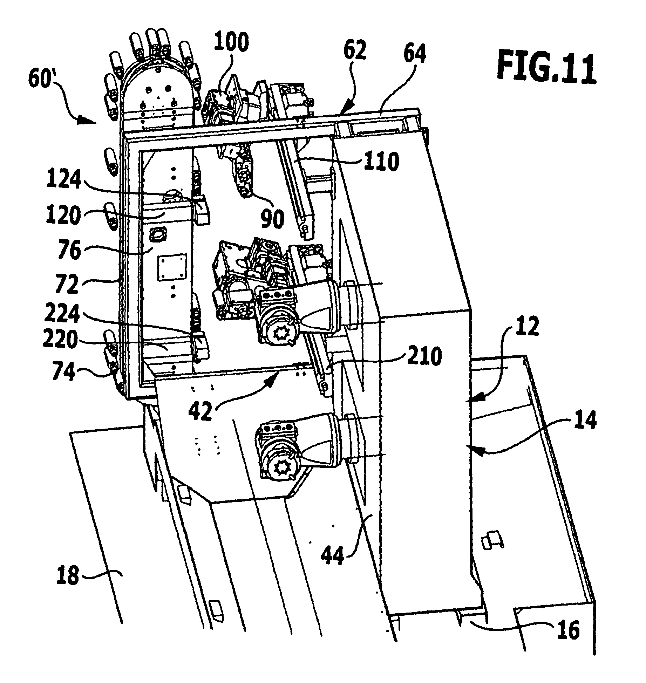

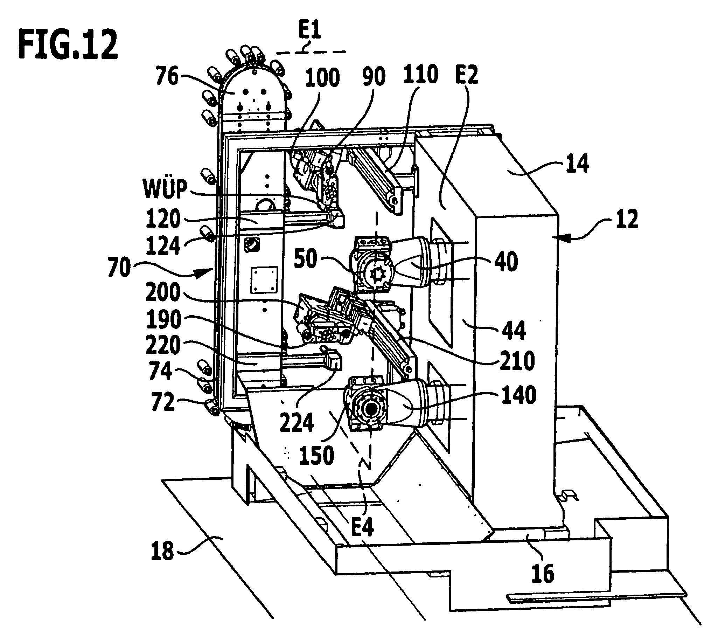

Bei einem zweiten Ausführungsbeispiel einer erfindungsgemäßen Werkzeugwechselvorrichtung, dargestellt in den Fig. 9 bis 12, ist zusätzlich zum ersten Werkzeugträger 40 ein zweiter Werkzeugträger 140 vorgesehen, der mit einer zweiten Werkzeugspindel 150 versehen ist.

In diesem Fall weist die Werkzeugwechselvorrichtung 60' nicht nur das erste Bediengerät 80, sondern ein zweites Bediengerät 180 auf, das in gleicher Weise aufgebaut ist, wie das erste Bediengerät, und dazu dient, aus dem Werkzeugmagazin 70, und zwar einer zweiten Werkzeugaustauschposition WAP ein Werkstück zu entnehmen und in die Werkzeugaufnahme 152 der zweiten Werkzeugspindel 150 einzusetzen.

Dabei umfasst das zweite Bediengerät 180 in gleicher Weise wie das erste Bediengerät 80 einen Werkzeuggreifer 190, der als Doppelgreifer ausgebildet und an einer Greiferbasis 200 angeordnet ist, die in gleicher Weise ausgebildet und aufgebaut ist, wie die erste Greiferbasis 100, und an einer Längsführung 210 geführt ist.

Ferner umfasst das zweite Bediengerät 180 noch die zweite Übergabeeinheit 220, deren Übergabegreifer 224 in gleicher Weise arbeitet, wie der Übergabegreifer 124 der ersten Übergabeeinheit 120.

Somit ist das Auswechseln des Werkzeugs WZ in der zweiten Werkzeugspindel 150 in gleicher Weise durchführbar, wie im Zusammenhang mit dem ersten Ausführungsbeispiel beschrieben, so dass diesbezüglich vollinhaltlich auf die Ausführungen zum ersten Ausführungsbeispiel Bezug genommen werden kann.

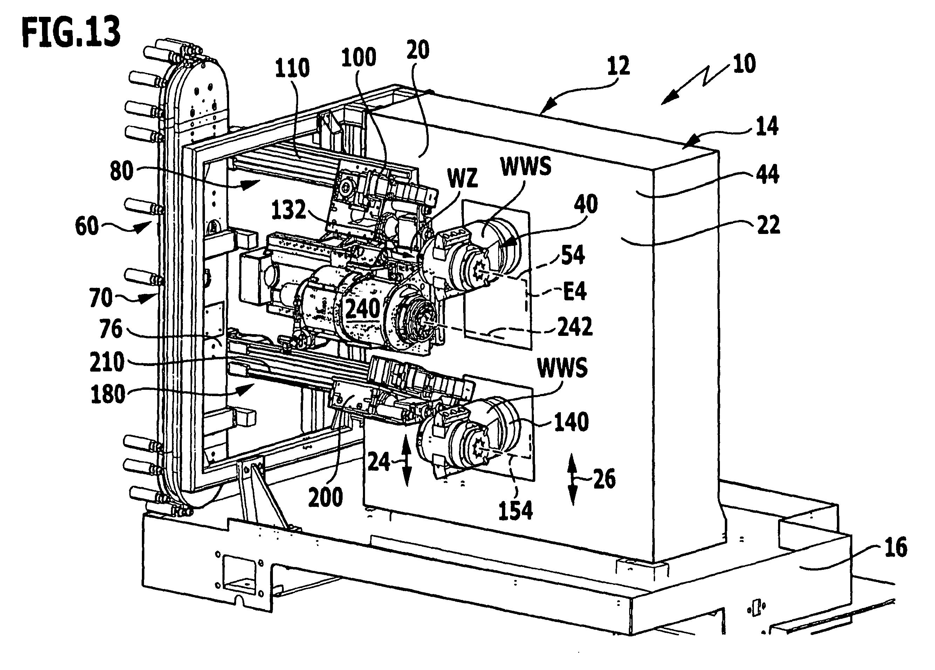

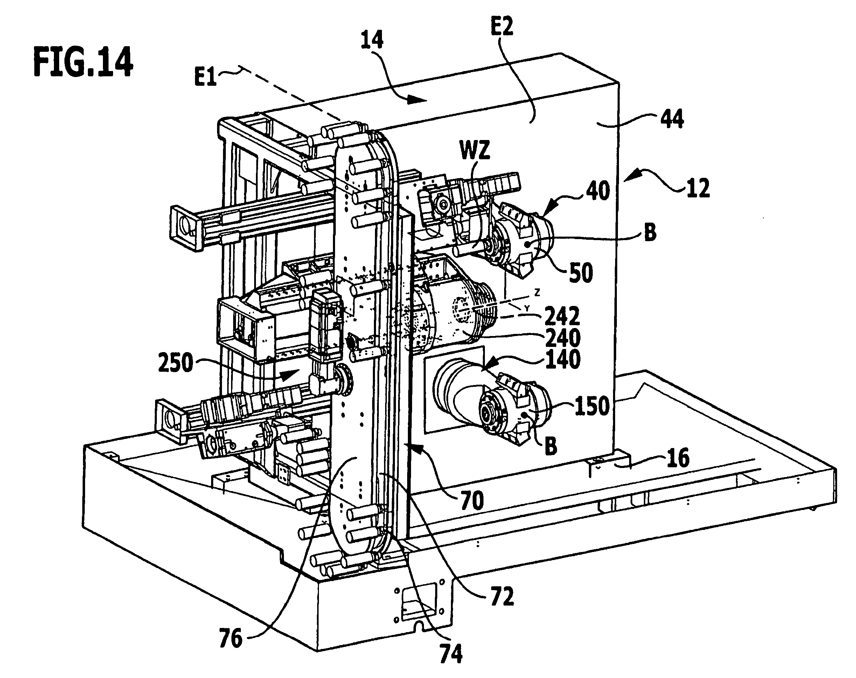

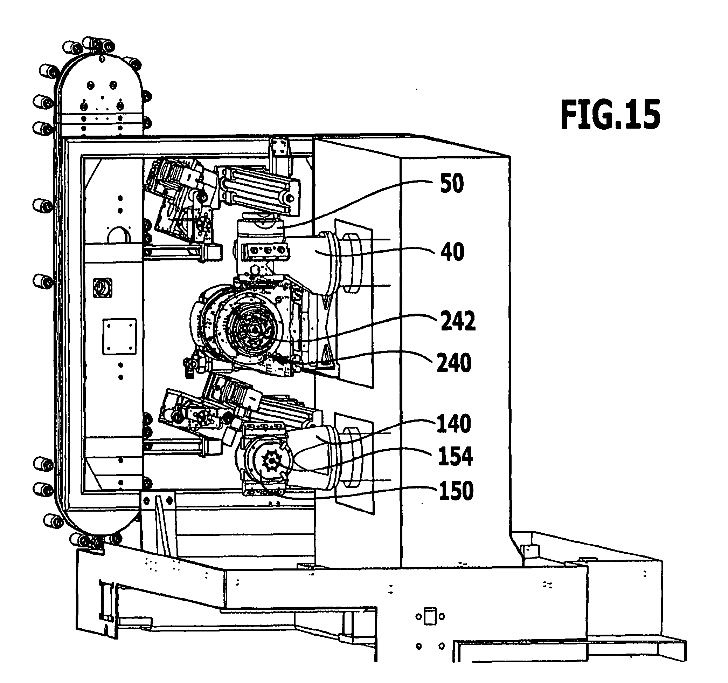

Bei einem dritten Ausführungsbeispiel, dargestellt in den Fig. 13 bis 15, ist aufbauend auf dem zweiten Ausführungsbeispiel noch zusätzlich eine Werkstückspindel 240 zur Aufnahme eines Werkstücks vorgesehen, das beispielsweise durch das Werkzeug WZ der ersten Werkzeugspindel 50 oder ein Werkzeug WZ der zweiten Werkstückspindel 150 bearbeitet werden kann, sofern eine Relativbewegung zwischen der Werkstückspindel 240 und den Werkzeugträgern 140 oder 40 so weit möglich ist, dass die jeweiligen Werkzeuge WZ das Werkstück in der Werkstückspindel 240 erreichen.

Vorzugsweise ist die Werkstückspindel 240 so angeordnet und ausgerichtet, dass deren Werkstückspindelachse 242 ungefähr parallel zur Ebene E2 und vorzugsweise senkrecht zur Ebene E1 verläuft. Ferner ist die Werkstückspindel 240 so angeordnet, dass sie zwischen den Längsführungen 110 und 210 der Bediengeräte 80 und 180 liegt, so dass auch die jeweilige Greiferbasis 100 bzw. 200 an der Werkstückspindel 240 seitlich vorbeibewegbar ist, ohne dass diese mit der Werkstückspindel 240 kollidieren.

Das heißt, dass bei diesem Ausführungsbeispiel die Werkzeugträger 40 und 140 in ihren Werkzeugwechseistellungen WWS jeweils so positioniert sind, dass die Werkzeugspindelachsen 54 bzw. 154 beiderseits im Abstand von der Werkstückspindel 240 verlaufen.

Vorzugsweise liegen dabei die Werkzeugspindelachsen 54 und 154 bei in der Werkzeugwechselstellung WWS stehenden Werkzeugträgern 40, 140 in einer gemeinsamen Ebene E4, welche ihrerseits parallel zu der Werkstückspindelachse 242 und somit auch parallel zur Z-Richtung bei einer Bearbeitung des Werkstücks verläuft.

Ferner liegt dabei die Ebene E4 vorzugsweise parallel zur Ebene E3 und somit auch vorzugsweise ungefähr parallel zu einer Frontseite 44 des Maschinenbettkörpers 14.

Damit besteht die Möglichkeit, bei in Werkzeugwechseistellung WWS stehenden Werkzeugträgern 40 und 140 jeweils ein Werkzeug WZ in die entsprechende Werkzeugaufnahme 52 bzw. 152 einzuwechseln, ohne dass Kollisionen mit der Werkstückspindel 240 und dem einem in dieser gehaltenen Werkstück erfolgen können.

Ferner ist bei dem dritten Ausführungsbeispiel gemäß Fig. 13 bis 14 noch vorgesehen, dass die Werkstückspindel 240 durch ein Schlittensystem 250 in Richtung der Werkstückspindelachse 242 und somit in Z-Richtung relativ zum Maschinenbettkörper 14 verschiebbar ist, so dass zur Bearbeitung eines in der Werkstückspindel 240 gehaltenen Werkstücks beispielsweise eine Relativbewegung in der Z-Richtung durch Bewegen der Werkstückspindel 240 in der Z-Richtung mittels des Schlittensystems 250 erfolgt und andererseits die Werkzeugträger 40 und 140 ihrerseits in der X-Richtung und der Y-Richtung relativ zum Maschinenbettkörper 14 bewegbar sind und ferner noch um eine so genannte B-Achse, die parallel zur Y-Achse verläuft, drehbar sind.

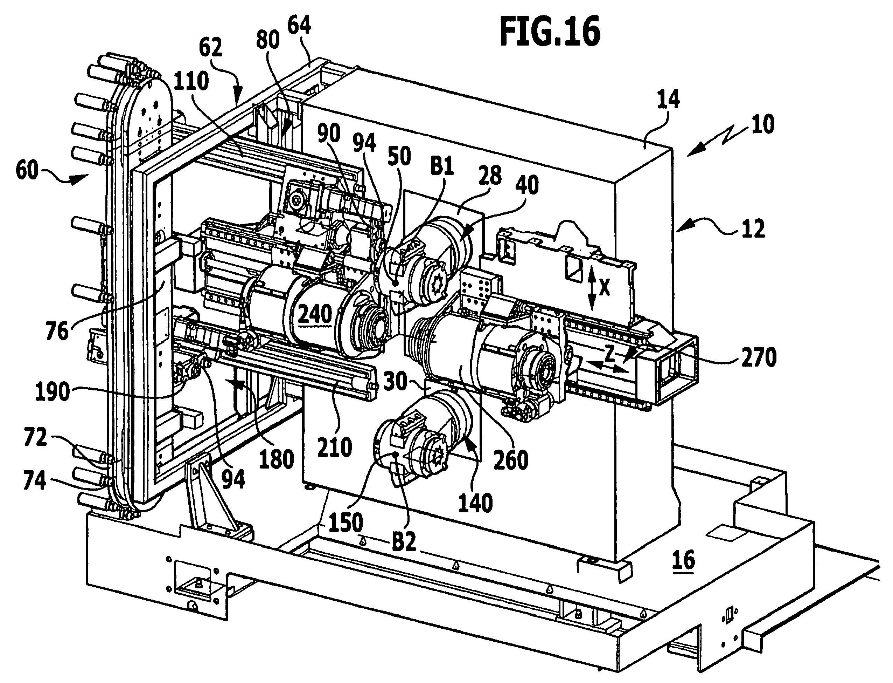

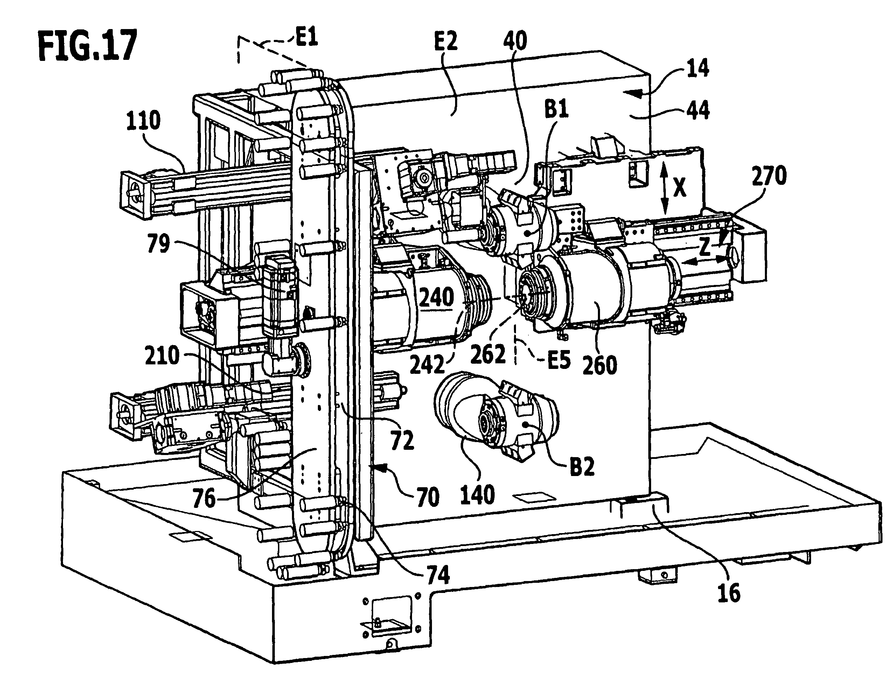

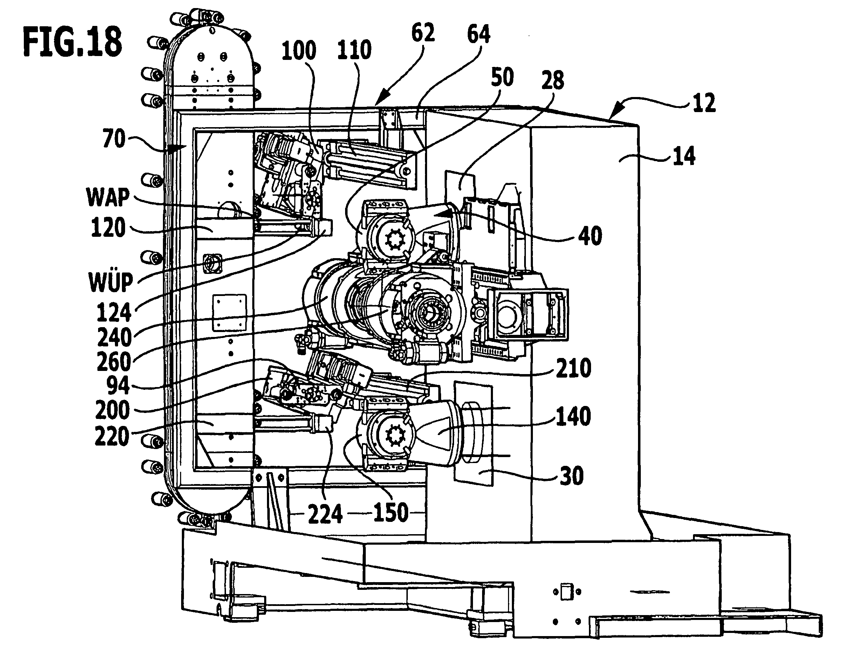

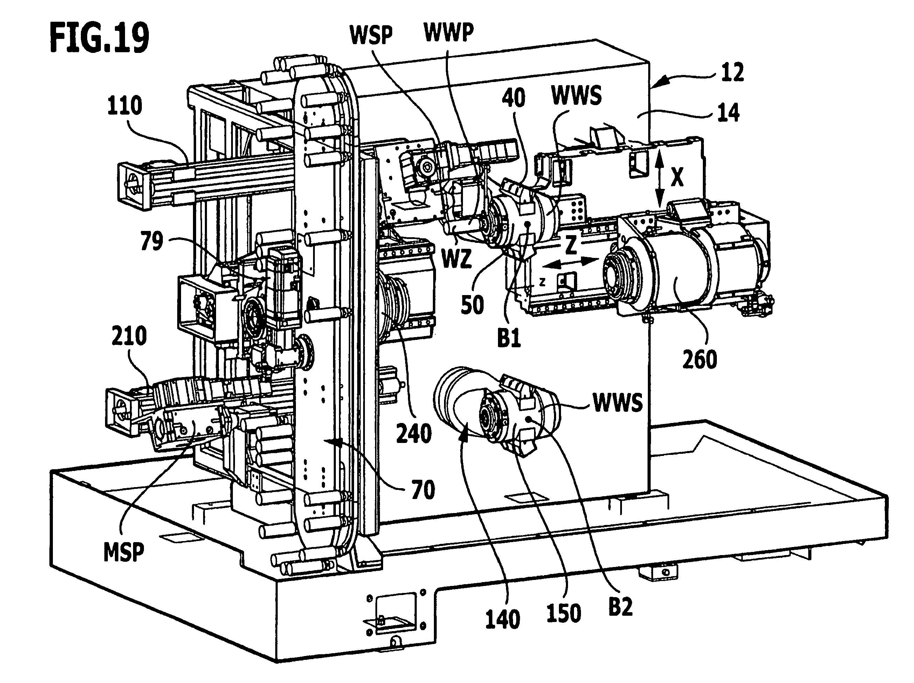

Bei einem vierten Ausführungsbeispiel, dargestellt in den Fig. 16 bis 19, sind diejenigen Elemente, die mit denen der vorstehend beschriebenen Ausführungsbeispiele identisch sind, mit denselben Bezugszeichen versehen, so dass hinsichtlich der Beschreibung derselben auch vollinhaltlich auf die Ausführungen zu diesen Ausführungsbeispielen verwiesen wird.

Im Gegensatz zum dritten Ausführungsbeispiel stellt das vierte Ausführungsbeispiel, gemäß Fig. 16 bis 19, eine erweiterte Ausführungsform dar, die zusätzlich zur Werkstückspindel 240 noch eine zweite Werkstückspindel 260 aufweist, die ihrerseits relativ zum Maschinenbettkörper 14 in einer so genannten X-Richtung dadurch bewegbar ist, dass ein die Werkstückspindel 260 tragendes und in Z-Richtung führendes Schlittensystem in X-Richtung verschiebbar am Maschinenbettkörper 14 ebenfalls als Schlittensystem geführt ist.

Somit ist die zweite Werkstückspindel 260 durch das Schlittensystem 270 in der Z-Richtung bewegbar und mitsamt dem Schlittensystem 270 in der X-Richtung relativ zum Maschinenbettkörper 14 bewegbar, so dass die zweite Werkstückspindel 260 einerseits koaxial zur ersten Werkstückspindel 240 ausgerichtet werden kann, andererseits aber beispielsweise in Richtung des zweiten Werkzeugträgers 140 verfahren werden kann, um diese Werkstückspindel 260 beispielsweise mit ihrer Werkstückspindelachse 262 koaxial oder nicht koaxial relativ zum zweiten Werkzeugträger 140 anzuordnen, wobei der zweite Werkzeugträger 140 beispielsweise in diesem Fall stationär angeordnet sein kann, das heißt nicht in X-Richtung relativ zum Maschinenbettkörper 14 verschiebbar ist, sondern lediglich um seine B-Achse B2 drehbar ist und gegebenenfalls in Y-Richtung verschiebbar ist.

Dagegen ist nach wie vor der erste Werkzeugträger 40 in seine B1-Achse drehbar und seinerseits noch vorzugsweise zumindest in X-Richtung, insbesondere auch noch in Y-Richtung relativ zum Maschinenbettkörper verschiebbar.

Bei dem vierten Ausführungsbeispiel sowie auch bei dem dritten Ausführungsbeispiel verläuft die erste Ebene E1 oder Speicherebene vorzugsweise senkrecht zu der Ebene E2 und somit auch vorzugsweise senkrecht zu den Werkstückspindelachsen 242 und 262.

Ferner liegen die Werkstückspindelachsen 242 und 262 vorzugsweise in einer Ebene E5, welche insbesondere parallel zur Ebene E3 und somit auch parallel zur Ebene E4 verläuft, und so angeordnet sein kann, dass sie mit der Ebene E4 zusammenfällt.

Schließlich liegen bei dem vierten Ausführungsbeispiel die Werkzeughalteelemente 92 in einer zur Ebene E2 parallelen Ebene E6 und sind in dieser bewegbar.

## Patentansprüche

1. Werkzeugwechselvorrichtung für mindestens einen Werkzeugträger (40, 140) aufweisende Werkzeugmaschinen (10), umfassend ein Werkzeugmagazin (70) mit einem eine Vielzahl von Speicheraufnahmen (74) aufweisenden Speicherelement (72), das zum Überführen der Speicheraufnahmen (74) in mindestens eine Werkzeugaustauschposition (WAP) bewegbar ist, und mit mindestens einem ersten Bediengerät (80, 180), mit welchem ein Übergeben eines Werkzeugs (WZ) zwischen der Werkzeugaustauschposition (WAP) und einer Werkzeugwechselposition (WWP), definiert durch eine Werkzeugaufnahme (52, 152) des mindestens einen in einer Werkzeugwechselstellung stehenden Werkzeugträgers (40, 140), durchführbar ist,
**dadurch gekennzeichnet, dass** das Werkzeugmagazin (70) neben einem Maschinenbettkörper (14) des Maschinengestells (12) angeordnet ist, dass die Werkzeugwechselvorrichtung (60) eine an dem Maschinengestell (12) der Werkzeugmaschine (10) montierbare Vorrichtungsbasis (62) aufweist, an welcher sowohl das Werkzeugmagazin (70) als auch das Bediengerät (80, 180) gehalten sind, dass das Bediengerät (80, 180) eine an der Vorrichtungsbasis (62) vorgesehene Längsführung (110, 210) aufweist, längs welcher ein Werkzeuggreifer (90, 190) des Bediengeräts (80, 180) bewegbar ist, dass der Werkzeuggreifer (90, 190) zwischen einer magazinseitigen Position (MSP) und einer werkzeugträgerseitigen Position (WSP) längs der Längsführung (110, 210) verfahrbar ist und dass der Werkzeuggreifer mit einem Mehrfachgreifer (94) versehen ist, mit welchem mehrere Werkzeuge (WZ) durch mehrere Werkzeughalteelemente (92) greifbar sind.

2. Werkzeugwechselvorrichtung nach Anspruch 1, **dadurch gekennzeichnet, dass** das Werkzeugmagazin (70) nahe einer quer zu einer Z-Achse verlaufenden Seite (68) des Maschinenbettkörpers (14) angeordnet ist.

3. Werkzeugwechselvorrichtung nach Anspruch 1 oder 2, **dadurch gekennzeichnet, dass** das Werkzeugmagazin (70) und das erste Bediengerät (80, 180) an der Werkzeugmaschine (10) funktionsfähig zusammenwirkend angeordnet sind und dass die Werkzeugwechselvorrichtung (60) an einem Maschinengestell (12) der Werkzeugmaschine (10) als eine Einheit im Wesentlichen nur unter Ausrichtung der Werkzeugwechselvorrichtung (60) relativ zu dem mindestens einen in der Werkzeugwechselstellung (WWS) stehenden Werkzeugträger (40, 140) montierbar ist.

4. Werkzeugwechselvorrichtung nach Anspruch 1, **dadurch gekennzeichnet, dass** das Werkzeugmagazin (70) außerhalb eines Arbeitsraums (42) der Werkzeugmaschine (10) angeordnet ist.

5. Werkzeugwechselvorrichtung nach einem der voranstehenden Ansprüche, **dadurch gekennzeichnet, dass** die Führung (110, 210) sich parallel zu einer durch zwei vorgegebene Bewegungsachsen (X, Z) definierten Bearbeitungsebene (E3) des Werkzeugträgers (40, 140) erstreckt.

6. Werkzeugwechselvorrichtung nach einem der voranstehenden Ansprüche, **dadurch gekennzeichnet, dass** das Speicherelement (72) sich in einer Speicherebene (E1) erstreckt, und dass beispielsweise die Führung (110, 210) die Speicherebene (E1) durchsetzt.

7. Werkzeugwechselvorrichtung nach einem der voranstehenden Ansprüche, **dadurch gekennzeichnet, dass** der Werkzeuggreifer (90, 190) in der magazinseitigen Position (MSP) auf einer Seite der Speicherebene (E1) liegt und in der werkzeugträgerseitigen Position (WSP) auf der anderen Seite der Speicherebene (E1).

8. Werkzeugwechselvorrichtung nach einem der voranstehenden Ansprüche, **dadurch gekennzeichnet, dass** der Mehrfachgreifer (94) bewegbar an einer Greiferbasis (100, 200) gelagert ist.

9. Werkzeugwechselvorrichtung nach einem der voranstehenden Ansprüche, **dadurch gekennzeichnet, dass** das Bediengerät (80, 180) eine der magazinseitigen Position (MSP) des Mehrfachgreifers (94) zugeordnete Übergabeeinheit (120, 220) aufweist, mit welcher ein Werkzeug (WZ) zwischen der Werkzeugaustauschposition (WAP) und einer Werkzeugübergabeposition (WÜP) für den Mehrfachgreifer (94) bewegbar ist.

10. Werkzeugwechselvorrichtung nach einem der voranstehenden Ansprüche, **dadurch gekennzeichnet, dass** die Werkzeugwechselvorrichtung (60) ein zweites Bediengerät (180) aufweist, mit welchem ein Übergeben eines Werkzeugs (WZ) zwischen einer zweiten Werkzeugaustauschposition (WAP) des Werkzeugmagazins (70) und einer Werkzeugwechselposition (WWP) durchführbar ist.

11. Werkzeugmaschine umfassend ein Maschinengestell, eine am Maschinengestell (12) angeordnete Werkstückaufnahme (240) und mindestens einen am Maschinengestell (12) angeordneten Werkzeugträger (40, 140), mit welchem in der Werkstückaufnahme (240) gehaltene Werkstücke bearbeitbar sind, und welcher in einer Werkzeugwechselstellung (WWS) positionierbar ist, **dadurch gekennzeichnet, dass** die Werkzeugmaschine (10) eine Werkzeugwechselvorrichtung. (60) aufweist, die nach einem der voranstehenden Ansprüche ausgebildet ist.

## Claims

1. Tool changing device for machine tools (10) having at least one tool carrier (40, 140), comprising a tool magazine (70) with a storage element (72) having a plurality of storage receptacles (74), said storage element being movable for transferring the storage receptacles (74) into at least one tool exchanging position (WAP), and with at least one first operating device (80, 180) for carrying out transfer of a tool (WZ) between the tool exchanging position (WAP) and a tool changing position (WWP) defined by a tool receptacle (52, 152) of the at least one tool carrier (40, 140) located in a tool changing position, **characterized in that** the tool magazine (70) is arranged next to a machine bed member (14) of the machine frame (12), that the tool changing device (60) has a device base (62) adapted to be mounted on the machine frame (12) of the machine tool (10), both the tool magazine (70) and the operating device (80, 180) being held on said device base, that the operating device (80, 180) has a longitudinal guide (110, 210) provided on the device base (62), a tool gripping device (90, 190) of the operating device (80, 180) being movable along said guide, that the tool gripping device (90, 190) is adapted to travel along the longitudinal guide (110, 210) between a position (MSP) on the magazine side and a position (WSP) on the tool carrier side, and that the tool gripping device is provided with a multiple gripping device (94), several tools (WZ) being adapted to be gripped by several tool holding elements (92) with said multiple gripping device.

2. Tool changing device as defined in claim 1, **characterized in that** the tool magazine (70) is arranged close to a side (68) of the machine bed member (14) extending transversely to a Z axis.

3. Tool changing device as defined in claim 1 or 2, **characterized in that** the tool magazine (70) and the first operating device (80, 180) are arranged on the machine tool (10) so as to cooperate operatively and that the tool changing device (60) is adapted to be mounted on a machine frame (12) of the machine tool (10) as a unit essentially only with alignment of the tool changing device (60) relative to the at least one tool carrier (40, 140) located in the tool changing position (WWS).

4. Tool changing device as defined in claim 1, **characterized in that** the tool magazine (70) is arranged outside a working space (42) of the machine tool (10).

5. Tool changing device as defined in any one of the preceding claims, **characterized in that** the guide (110, 210) extends parallel to a plane of machining (E3) of the tool carrier (40, 140) defined by two predetermined axes of movement (X, Z).

6. Tool changing device as defined in any one of the preceding claims, **characterized in that** the storage element (72) extends in a plane of storage (E1), and that the guide (110, 210), for example, passes through the plane of storage (E1).

7. Tool changing device as defined in any one of the preceding claims, **characterized in that** the tool gripping device (90, 190) is located on one side of the plane of storage (E1) in the position (MSP) on the magazine side and on the other side of the plane of storage (E1) in the position (WSP) on the tool carrier side.

8. Tool changing device as defined in any one of the preceding claims, **characterized in that** the multiple gripping device (94) is mounted on a gripping device base (100, 200) so as to be movable.

9. Tool changing device as defined in any one of the preceding claims, **characterized in that** the operating device (80, 180) has a transfer unit (120, 220) associated with the position (MSP) of the multiple gripping device (94) on the magazine side, a tool (WZ) being movable between the tool exchanging position (WAP) and a tool transfer position (WUP) for the multiple gripping device (94) with said transfer unit.

10. Tool changing device as defined in any one of the preceding claims, **characterized in that** the tool changing device (60) has a second operating device (180) for carrying out transfer of a tool (WZ) between a second tool exchanging position (WAP) of the tool magazine (70) and a tool changing position (WWP).

11. Machine tool comprising a machine frame, a workpiece receptacle (240) arranged on the machine frame (12) and at least one tool carrier (40, 140) arranged on the machine frame (12), workpieces held in the workpiece receptacle (240) being machinable with said tool carrier, and said tool carrier being positionable in a tool changing position (WWS), **characterized in that** the machine tool (10) has a tool changing device (60) designed in accordance with any one of the preceding claims.

## Revendications

1. Dispositif de changement d'outil pour des machines-outils (10) présentant au moins un porte-outil (40, 140), comportant un magasin d'outil (70) avec un élément de stockage (72) présentant une pluralité de logements de stockage (74) qui peut être déplacé pour le transport des logements de stockage (74) dans au moins une position de remplacement d'outil (WAP), et avec au moins un premier appareil de commande (80, 180) avec lequel peut être réalisée une remise d'un outil (WZ) entre la position de remplacement d'outil (WAP) et une position de changement d'outil (WWP) de manière définie par un logement d'outil (52, 152) de l'au moins un porte-outil (40, 140) se trouvant dans une position de changement d'outil, **caractérisé en ce que** le magasin d'outil (70) est disposé à côté d'un corps de socle de machine (14) du bâti de machine (12), **en ce que** le dispositif de changement d'outil (60) présente une base de dispositif (62) pouvant être montée sur le bâti de machine (12) de la machine-outil (10), sur laquelle non seulement le magasin d'outil (70) mais aussi l'appareil de commande (80, 180) sont maintenus, **en ce que** l'appareil de commande (80, 180) présente un guidage longitudinal (110, 210) prévu sur la base de dispositif (62), le long duquel une pince d'outil (90, 190) de l'appareil de commande (80, 180) peut être déplacée, **en ce que** la pince d'outil (90, 190) peut être déplacée entre une position côté magasin (MSP) et une position côté porte-outil (WSP) le long du guidage longitudinal (110, 210) et **en ce que** la pince d'outil est pourvue d'une pince multiple (94), avec laquelle plusieurs outils (WZ) peuvent être saisis par plusieurs éléments de retenue d'outil (92).

2. Dispositif de changement d'outil selon la revendication 1, **caractérisé en ce que** le magasin d'outil (70) est disposé près d'un côté (68) s'étendant transversalement à un axe Z du corps de socle de machine (14).

3. Dispositif de changement d'outil selon la revendication 1 ou 2, **caractérisé en ce que** le magasin d'outil (70) et le premier appareil de commande (80, 180) sont disposés de manière à coopérer fonctionnellement sur la machine-outil (10) et **en ce que** le dispositif de changement d'outil (60) ne peut être monté sur un bâti (12) de machine-outil (10) comme une unité essentiellement qu'en orientant le dispositif de changement d'outil (60) par rapport à l'au moins un porte-outil (40, 140) se trouvant dans la position de changement d'outil (WWS).

4. Dispositif de changement d'outil selon la revendication 1, **caractérisé en ce que** le magasin d'outil (70) est disposé en dehors d'un espace de travail (42) de la machine-outil (10).

5. Dispositif de changement d'outil selon l'une quelconque des revendications précédentes, **caractérisé en ce que** le guidage (110, 210) s'étend parallèlement à un plan d'usinage (E3) du porte-outil (40, 140) défini par deux axes de déplacement (X, Z) prescrits.

6. Dispositif de changement d'outil selon l'une quelconque des revendications précédentes, **caractérisé en ce que** l'élément de stockage (72) s'étend dans un plan de stockage (E1) et **en ce que** par exemple le guidage (110, 210) traverse le plan de stockage (E1).

7. Dispositif de changement d'outil selon l'une quelconque des revendications précédentes, **caractérisé en ce que** la pince d'outil (90, 190) se trouve, dans la position côté magasin (MSP), sur un côté du plan de stockage (E1) et, dans la position côté porte-outil (WSP), de l'autre côté du plan de stockage (E1).

8. Dispositif de changement d'outil selon l'une quelconque des revendications précédentes, **caractérisé en ce que** la pince multiple (94) est logée de manière mobile sur une base de pince (100, 200).

9. Dispositif de changement d'outil selon l'une quelconque des revendications précédentes, **caractérisé en ce que** l'appareil de commande (80, 180) présente une unité de remise (120, 220) affectée à la position côté magasin (MSP) de la pince multiple (94), avec laquelle un outil (WZ) peut être déplacé entre la position de remplacement d'outil (WAP) et une position de remise d'outil (WÜP) pour la pince multiple (94).

10. Dispositif de changement d'outil selon l'une quelconque des revendications précédentes, **caractérisé en ce que** le dispositif de changement d'outil (60) présente un second appareil de commande (180), avec lequel peut être réalisée une remise d'un outil (WZ) entre une deuxième position de remplacement d'outil (WAP) du magasin d'outil (70) et une position de changement d'outil (WWP).

11. Machine-outil comprenant un bâti de machine, un logement de pièces (240) disposé sur le bâti de machine (12) et au moins un porte-outil (40, 140) disposé sur le bâti de machine (12), avec lequel des pièces maintenues dans le logement d'outil (240) peuvent être usinées et qui peut être positionné dans une position de changement d'outil (WWS), **caractérisée en ce que** la machine-outil (10) présente un dispositif de changement d'outil (60) qui est réalisé selon l'une quelconque des revendications précédentes.
